# EUROPÄISCHE PATENTSCHRIFT

(11) **EP 4 255 780 B1**
(45) Veröffentlichungstag und Bekanntmachung des Hinweises auf die Patenterteilung: **09.10.2024**
(21) Anmeldenummer: 21805924.4
(22) Anmeldetag: 03.11.2021
(51) Int. Cl.: B60T 8/32, B60T 7/04

(54) **VERFAHREN ZUM BETREIBEN EINES BREMSSYSTEMS EINES KRAFTFAHRZEUGS**
METHOD OF CONTROL OF A VEHICLE BRAKE
MÉTHODE DE COMMANDE DE FREINAGE DE VÉHICULE

(30) Priorität: 02.12.2020 DE 102020215174
(43) Veröffentlichungstag der Anmeldung: 11.10.2023
(73) Patentinhaber: Robert Bosch GmbH, 70442 Stuttgart (DE)
(72) Erfinder: BAEHRLE-MILLER, Frank, 71101 Schoenaich (DE); HEER, Benjamin, 71522 Backnang (DE)
(86) Internationale Anmeldenummer: PCT/EP2021/080463
(87) Internationale Veröffentlichungsnummer: WO 2022/117270

(56) Entgegenhaltungen:
- EP-A1- 2 055 541
- WO-A1-89/01887
- DE-A1- 102012 212 329
- DE-A1- 102019 200 827

## Beschreibung

Die vorliegende Erfindung betrifft ein Verfahren nach dem unabhängigen Anspruch 1 zum Betreiben eines Bremssystems eines Kraftfahrzeugs, wobei das Bremssystem eine Bremsübertragungseinrichtung sowie eine elektrische Parkbremseinrichtung aufweist. Die Erfindung betrifft des Weiteren ein Kraftfahrzeug mit einem derart betriebenen Bremssystem nach dem Anspruch 9.

Kraftfahrzeuge weisen üblicherweise ein Bremssystem auf, welches dem Bremsen während der Fahrt sowie als sogenannte Parkbremse dient. Zum Bremsen während der Fahrt umfasst das Bremssystem in der Regel eine Bremse, welche nachfolgend auch als Betriebsbremse bezeichnet wird. Die Parkbremsfunktion wird in der Regel über eine zugehörige Parkbremseinrichtung des Bremssystems erzielt. Die Parkbremseinrichtung weist zu diesem Zweck wenigstens eine Parkbremse auf. Die Aktivierung der Parkbremse, auch als Feststellen der Parkbremse bekannt, setzt üblicherweise einen Trigger voraus, der über eine Auslöseeinrichtung erfolgt. Die Auslöseeinrichtung kann zu diesem Zweck einen von einem Benutzer manuell betätigbaren Taster aufweisen. Mit der Parkbremseinrichtung erfolgt eine Sicherung des Kraftfahrzeugs, sodass, insbesondere in einer Parkposition, ein Rollen des Kraftfahrzeugs verhindert ist. Zu diesem Zweck wird mit der zumindest einen Parkbremse zumindest ein Rad des Kraftfahrzeugs blockierend gebremst. Aus Sicherheitsgründen ist die Aktivierung der Parkbremseinrichtung und somit das blockierende Bremsen zumindest eines Rades des Kraftfahrzeugs lediglich dann durchzuführen, wenn das Kraftfahrzeug stillsteht. Zu diesem Zweck greifen aus dem Stand der Technik bekannte Parkbremseinrichtungen auf Raddrehzahlmesser des Kraftfahrzeugs zurück. Die Auswertung der von Raddrehzahlmessern gelieferten Daten erfolgen üblicherweise in einem Steuergerät, in der Regel in einem ESP-Steuergerät, des Kraftfahrzeugs, um eine Geschwindigkeit des Kraftfahrzeugs zu ermitteln und somit auch einen Stillstand des Kraftfahrzeugs festzustellen. Erst wenn die von den Raddrehzahlmessern gelieferten Daten auf einen Stillstand des Kraftfahrzeugs schließen lassen, erfolgt eine Aktivierung der Parkbremseinrichtung, auch wenn die Auslöseeinrichtung bereits zuvor betätigt wurde.

Als Stand der Technik können die folgenden Dokumente erwähnt werden :
DE 10 2019 200827 A1, EP 2 055 541 A1, DE 10 2012 212329 A1 und WO 89/01887 A1.

Hierbei ergibt sich das Problem, dass bei einem Ausfall der Raddrehzahlmesser und/oder oder des die Daten der Raddrehzahlmesser auswertenden Steuergeräts, insbesondere des ESP-Steuergerät, eine Aktivierung der Parkbremseinrichtung ausgesetzt wird. Somit soll verhindert werden, dass die Parkbremseinrichtung während der Fahrt des Kraftfahrzeugs aktiviert wird. Dies führt zu einer reduzierten bis hin zur fehlenden Verfügbarkeit der Parkbremseinrichtung. Darüber hinaus kann das Kraftfahrzeug in der Folge auch bei einer notwendigen und/oder erwünschten Aktivierung der Parkbremseinrichtung, beispielsweise beim Parken des Kraftfahrzeugs, rollen und sich somit bewegen.

Die vorliegende Erfindung beschäftigt sich daher mit der Aufgabe, für ein Verfahren zum Betreiben eines Bremssystems eines Kraftfahrzeugs der vorstehend genannten Art sowie für ein solches Kraftfahrzeug verbesserte oder zumindest andere Ausführungsformen anzugeben, welche sich insbesondere durch eine erhöhte Sicherheit bei zugleich einfacher Umsetzung auszeichnen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, insbesondere bei einem Ausfall einer mithilfe von Raddrehzahlen eines Kraftfahrzeugs erfolgten Stillstanderkennung des Kraftfahrzeugs, zum Aktivieren einer Parkbremseinrichtung eine mittels einer Bremsübertragungseinrichtung ausgeübte Bremskraft sowie die daraus resultierende Verzögerung, also negative Beschleunigung, des Kraftfahrzeugs und eine maximal mögliche Geschwindigkeit des Kraftfahrzeugs heranzuziehen, um zu ermitteln, ob das Kraftfahrzeug unter Berücksichtigung der maximal möglichen Geschwindigkeit sowie der Verzögerung und der Zeitspanne der Verzögerung still steht, wobei die Parkbremseinrichtung erst dann aktiviert wird, wenn zum Zeitpunkt des Auslösens der Parkbremsfunktion ein Stillstand des Kraftfahrzeugs ermittelt wurde. Somit ist es auf einfache und zuverlässige Weise möglich, auch bei mangelnden Informationen über Raddrehzahlen des Kraftfahrzeugs und/oder beim Ausfall der Auswertung von Raddrehzahlen des Kraftfahrzeugs, beispielsweise eines ESP-Steuergeräts, die Parkbremseinrichtung bei einem Stillstand des Kraftfahrzeugs zu aktivieren. In der Folge ist die Sicherheit und Verfügbarkeit bei zugleich einfacher und kostengünstiger Umsetzung erhöht.

Der erfindungsgemäße Gedanke wird in einem Verfahren zum Betreiben eines Bremssystems eines Kraftfahrzeugs umgesetzt. Das Bremssystem umfasst eine Betriebsbremseinrichtung, die Bremsübertragungseinrichtung und die Parkbremseinrichtung. Die Betriebsbremseinrichtung weist zumindest eine Betriebsbremse auf, welche dem Bremsen des Kraftfahrzeugs bei der Fahrt dient. Die Bremsübertragungseinrichtung weist eine Ausgangsstange auf, welche mit der zumindest einen Betriebsbremse derart verbunden ist, das mittels der Ausgangsstange eine Bremskraft zum Bremsen auf die zumindest eine Betriebsbremse übertragen wird. Die Parkbremseinrichtung weist zum Feststellen des Kraftfahrzeugs zumindest eine Parkbremse auf. Die Parkbremseinrichtung weist ferner eine Auslöseeinrichtung zum Aktivieren der zumindest einen Parkbremse auf. Erfindungsgemäß werden zum Ermitteln des Stillstands des Kraftfahrzeugs ein Verstellweg der Ausgangsstange sowie eine maximal mögliche Geschwindigkeit des Kraftfahrzeugs herangezogen. Dabei wird abhängig des Verstellwegs eine mit der zumindest einen Betriebsbremse ausgeübte Verzögerung des Kraftfahrzeugs ermittelt und ausgehend von der maximal möglichen Geschwindigkeit unter Berücksichtigung der Zeitspanne der Verzögerung ermittelt, ob das Kraftfahrzeug bei der Betätigung der Auslöseeinrichtung still steht. Es wird also ermittelt, ob das Kraftfahrzeug zu einem Zeitpunkt der Betätigung der Auslöseeinrichtung, nachfolgend auch Betätigungszeitpunkt genannt, stillsteht. Dabei wird die zumindest eine Parkbremse aktiviert, wenn zum Betätigungszeitpunkt ein Stillstand ermittelt ist.

Das erfindungsgemäße Verfahren kommt zweckmäßig dann zum Einsatz, wenn Daten einer Raddrehzahlmesseinrichtung zur Messung der Drehzahl zumindest eines Rads des Kraftfahrzeugs nicht zur Verfügung stehen, weil beispielsweise die Raddrehzahlmesseinrichtung ausfällt, und/oder wenn eine Auswertung der Daten der Raddrehzahlmesseinrichtung nicht möglich ist, insbesondere, wenn eine die Daten auswertende Einrichtung beschädigt ist oder ausfällt. Eine derartige, die Daten auswertende Einrichtung ist insbesondere ein Steuergerät, beispielsweise ein ESP-Steuergerät, des Kraftfahrzeugs. Folglich kommt das erfindungsgemäße Verfahren insbesondere dann zum Einsatz, wenn das ESP-Steuergerät beschädigt und/oder ausgefallen ist. Das erfindungsgemäße Verfahren erlaubt somit die Nutzung der Parkbremseinrichtung auch bei einem Ausfall des ESP-Steuergeräts.

Dementsprechend erfolgen die genannten Ermittlungen und/oder das Heranziehen der maximalen Geschwindigkeit zweckmäßig unabhängig von einer Raddrehzahlmessung.

Die maximal mögliche Geschwindigkeit des Kraftfahrzeugs ist zweckmäßig diejenige Geschwindigkeit, welche das Kraftfahrzeug bis zum Zeitpunkt der ansetzenden Verzögerung maximal erreichen kann.

Als maximal mögliche Geschwindigkeit kann prinzipiell die maximal zulässige Geschwindigkeit des Kraftfahrzeugs herangezogen werden.

Alternativ kann zum Heranziehen der maximal möglichen Geschwindigkeit eine zuletzt bekannte Geschwindigkeit des Kraftfahrzeugs berücksichtigt werden. Bei der maximal möglichen Geschwindigkeit wird also in diesem Fall eine zu einem Initialzeitpunkt bekannte Geschwindigkeit des Kraftfahrzeugs berücksichtigt.

Der Initialzeitpunkt kann der Zeitpunkt eines Ausfalls der Raddrehzahlmesseinrichtung des Kraftfahrzeugs sein. Alternativ oder zusätzlich kann der Initialzeitpunkt der Zeitpunkt eines Ausfalls eines ESP-Steuergeräts des Kraftfahrzeugs sein. Insbesondere kann hierdurch das erfindungsgemäße Verfahren ausgelöst und durchgeführt werden.

Vorstellbar ist es auch, als Initialzeitpunkt den Zeitpunkt eines Stillstands des Kraftfahrzeugs und somit der Geschwindigkeit von null zu verwenden. Dies kann beispielsweise bei einer letztmaligen Aktivierung der zumindest einen Parkbremse und/oder beim erstmaligen Anfahren nach der letztmaligen Aktivierung der zumindest einen Parkbremse gegeben sein.

Das Heranziehen der maximalen Geschwindigkeit kann insbesondere durch eine Abschätzung der maximal möglichen Geschwindigkeit ausgehend von der Geschwindigkeit zum Initialzeitpunkt erfolgen. Hierzu ist es insbesondere vorstellbar, eine mit dem Kraftfahrzeug maximal mögliche Beschleunigung, beispielsweise durch eine Antriebseinrichtung des Kraftfahrzeugs zu berücksichtigen. Mit anderen Worten, beim Heranziehen der maximalen Geschwindigkeit kann angenommen werden, dass das Kraftfahrzeug mit den vorhandenen Mitteln, insbesondere mit der vorhandenen Antriebseinrichtung, mit maximaler Leistung beschleunigt wird. Alternativ oder zusätzlich kann hierbei ein Gefälle während der Fahrt berücksichtigt werden. Ebenso ist es vorstellbar, gegebenenfalls vorhandene Koordinaten des Kraftfahrzeugs und deren Änderung, also insbesondere GPS-Daten und deren Änderung, zum Heranziehen der maximalen Geschwindigkeit zu berücksichtigen.

Wie vorstehend erläutert, erfolgen die erfindungsgemäßen Schritte unter Berücksichtigung der Betätigung der Auslöseeinrichtung. Dies hat insbesondere zur Folge, dass eine Aktivierung der zumindest einen Parkbremse vorteilhaft ohne eine Betätigung der Auslöseeinrichtung nicht erfolgt. Mit anderen Worten, eine Aktivierung der zumindest einen Parkbremse bleibt vorteilhaft ohne Betätigung der Auslöseeinrichtung aus.

Die Übertragungseinrichtung kann als ein Bremskraftverstärker und/oder als eine Fremdkraftbremse ausgestaltet sein.

Der Bremskraftverstärkerkann prinzipiell beliebig ausgestaltet sein. Vorstellbar sind beispielsweise Vakuum betriebene Bremskraftverstärker. Der Bremskraftverstärker kann insbesondere zumindest teilweise elektrisch, vorteilhaft elektromechanisch, betrieben sein. Die Bremsübertragungseinrichtung kann mit einem Betätiger gekoppelt sein, sodass eine Betätigung des Betätigers zu einer Verstellung der Ausgangsstange und somit einer Änderung des Verstellwegs führen kann.

Der Betätiger ist üblicherweise von einem Benutzer, also insbesondere einem Fahrzugführer, manuell betätigt, um das Kraftfahrzeug während der Fahrt zu bremsen. Der Betätiger ist insbesondere ein Bremspedal und dergleichen.

Bei zumindest teilautonom fahrenden Kraftfahrzeugen kann der Betätiger auch autonom über eine Steuereinrichtung des Kraftfahrzeugs betätigt werden.

Zumindest eine der wenigstens einen Parkbremse kann wenigstens teilweise einer der wenigstens einen Betriebsbremsen entsprechen.

Ist die zumindest eine Parkbremse aktiviert, so blockiert es zumindest ein Rad des Kraftfahrzeugs, stellt dieses also fest. Die Parkbremse ist dem Fachmann daher auch als "Feststellbremse" bekannt. Das Blockieren des zumindest einen Rads erfolgt hierbei zweckmäßig bis zum Deaktivieren der zumindest einen Parkbremse. Das Deaktivieren kann ebenfalls über die Auslöseeinrichtung erfolgen.

Die Auslöseeinrichtung dient als Trigger zum Aktivieren der zumindest einen Parkbremse. Die Aktivierung der zumindest einen Parkbremse wird also erst dann ausgelöst, wenn die Auslöseeinrichtung betätigt wird. Die Betätigung der Auslöseeinrichtung erfolgt üblicherweise durch den Benutzer des Kraftfahrzeugs. Die Auslöseeinrichtung kann einen Taster aufweisen und/oder beim Verstellen einer Schaltung des Kraftfahrzeugs in die "Parkstellung" betätigt sein und/oder beim Verstellen einer Zündung des Kraftfahrzeugs in eine "Aus" Stellung betätigt sein.

Bei zumindest teilautonom fahrenden Kraftfahrzeugen kann die Auslöseeinrichtung auch autonom über eine Steuereinrichtung des Kraftfahrzeugs betätigt werden.

Das Bestimmen der Verzögerung über den Verstellweg erfolgt vorteilhaft über das Ermitteln der mittels der Bremsübertragungseinrichtung ausgeübten Bremskraft. Es wird also die Bremskraft ermittelt und/oder die bereits in der Bremsübertragungseinrichtung ermittelte Bremskraft herangezogen. Die mittels der Bremsübertragungseinrichtung auf die zumindest eine Betriebsbremse übertragene Bremskraft ist hierbei abhängig vom Verstellweg, wobei zweckmäßig größere Verstellwege eine höhere Bremskraft zur Folge haben und umgekehrt. Da der Verstellweg eine in der Bremsübertragungseinrichtung relevante Größe ist, die zweckmäßig ohnehin in der Bremsübertragungseinrichtung hinterlegt ist und/oder vorliegt, kann auf diese Weise auf den ohnehin bekannten Verstellweg zum Ermitteln der Verzögerung zurückgegriffen werden. Das Verfahren und dessen Umsetzung werden auf diese Weise vereinfacht.

Vorteilhaft ist die zumindest eine Betriebsbremse mit einem Fluid betätigt. Dabei erfolgt die Ermittlung der Verzögerung bevorzugt auf Basis des mit dem Fluid ausgebübten Drucks, dem Fachmann auch als Bremsdruck bekannt. Bevorzugt wird über die Ausgangsstange ein Kolben in einem Volumen mit einem Bremsfluid bewegt und somit der Druck im Fluid erzeugt. Hierbei kann insbesondere aufgrund der gegebenen Dimensionen des Kolbens und des Volumens der Bremsdruck ermittelt werden. Bevorzugt ist die zumindest eine Betriebsbremse hydraulisch, insbesondere mit einer Bremsflüssigkeit, betätigt.

Es versteht sich, dass zeitliche Änderungen des Verstellwegs und somit der Bremskraft bei der Ermittlung der Verzögerung berücksichtigt werden. Mit anderen Worten, unter Verstellweg und Bremskraft sind vorliegend entsprechende zeitliche Verläufe des Verstellwegs und der Bremskraft zu verstehen. Dies führt dazu, dass jeweils auch der zeitliche Verlauf der Verzögerung ermittelt und berücksichtigt wird. Als Beispiel sei hierbei auf einen Bremsvorgang mit unterschiedlichen Verstellwegen hingewiesen. Beispielsweise kann die zumindest eine Betriebsbremse zunächst mit einer ersten Bremskraft und dann mit einer zweiten Bremskraft betätigt werden. Hierbei wird für die jeweilige Bremskraft und deren Zeitspanne eine zugehörige Verzögerung berücksichtigt. Mit anderen Worten, bei einem mehrstufigen Bremsvorgang wird für die jeweilige Bremsstufe eine zugehörige Verzögerung ermittelt und mit der jeweils zugehörigen Zeitspanne beim Ermitteln des Stillstands des Kraftfahrzeus berücksichtigt.

Es versteht sich ferner, dass das Heranziehen der maximalen Geschwindigkeit mögliche Erhöhungen der maximalen Geschwindigkeit berücksichtigt. Erfolgt also beispielsweise vor dem Stillstand des Kraftfahrzeugs eine Beschleunigung des Kraftfahrzeugs, führt dies zu einer entsprechenden Erhöhung der maximalen möglichen Geschwindigkeit, sodass im Ergebnis ein Verlauf der maximal möglichen Geschwindigkeit berücksichtigt wird.

Die Ermittlung des Stillstands des Kraftfahrzeugs kann durch das Ermitteln einer sich aus der Verzögerung und deren Zeitspanne ausgehend von der maximal möglichen Geschwindigkeit ergebenen aktuellen Geschwindigkeit des Kraftfahrzeugs erfolgen. Es wird also ermittelt, ob die ermittelte aktuelle Geschwindigkeit zum Betätigungszeitpunkt der Auslöseeinrichtung einen Stillstand des Kraftfahrzeugs bedeutet. Dies ist insbesondere dann der Fall, wenn die ermittelte aktuelle Geschwindigkeit zum Betätigungszeitpunkt null beträgt. Die zumindest eine Parkbremse wird also dann aktiviert, wenn die ermittelte aktuelle Geschwindigkeit einen Stillstand des Kraftfahrzeugs bedeutet.

Alternativ kann zur Ermittlung des Stillstands des Kraftfahrzeugs die zeitliche Dauer ermittelt werden, bei welcher das Kraftfahrzeug ausgehend von der maximal möglichen Geschwindigkeit unter Berücksichtigung der Verzögerung sowie deren Zeitspanne stillsteht. Erfolgt die Betätigung der Auslöseeinrichtung mit dem Ablauf der Dauer oder danach, wird die zumindest eine Parkbremse aktiviert. Dies kann derart erfolgen, dass die Parkbremseinrichtung aktiviert wird, wenn eine Differenz zwischen dem Betätigungszeitpunkt und dem Initialzeitpunkt größer ist als die Dauer.

Selbstverständlich können zum Ermitteln des Stillstands auch sowohl die aktuelle Geschwindigkeit als auch die Dauer berücksichtigt werden.

Wie vorstehend erwähnt, werden jeweils entsprechende Verläufe, insbesondere der Verzögerung und der maximal möglichen Geschwindigkeit berücksichtigt. Dies kann dadurch umgesetzt sein, dass die aktuelle Geschwindigkeit und/oder die Dauer iterativ ermittelt werden.

Ist die Auslöseeinrichtung betätigt bevor ein Stillstand des Kraftfahrzeugs ermittelt wurde, also beispielsweise die ermittelte Geschwindigkeit zum Betätigungszeitpunkt ungleich null und/oder die die Differenz zwischen dem Betätigungszeitpunkt und dem Initialzeitpunkt kleiner als die Dauer, bleibt eine Aktivierung der zumindest einen Parkbremse zweckmäßig aus. Dabei kann die Aktivierung hinausgezögert werden, bis ein Stillstand ermittelt ist. Mit anderen Worten, die zumindest eine Parkbremse wird erst dann aktiviert, wenn ein Stillstand des Kraftfahrzeugs ermittelt ist.

Bei einer Betätigung der Auslöseeinrichtung vor einem ermittelten Stillstand des Kraftfahrzeugs kann eine Verzögerung, insbesondere eine zusätzliche Verzögerung, des Kraftfahrzeugs durchgeführt und die zumindest eine Parkbremse erst dann aktiviert werden, wenn ein Stillstand des Kraftfahrzeugs ermittelt ist. Somit wird die Dauer des Hinauszögerns der Aktivierung der zumindest einen Parkbremse reduziert.

Bevorzugt wird dabei die zumindest eine Betriebsbremse mit einer vorgegebenen Bremskraft betätigt und die zumindest eine Parkbremse aktiviert, wenn ein Stillstand des Kraftfahrzeugs ermittelt ist.

Bei einer Betätigung der Auslöseeinrichtung vor einem ermittelten Stillstand des Kraftfahrzeugs kann alternativ oder zusätzlich eine Meldung mit einer Aufforderung an einen Benutzer ausgegeben werden, die Auslöseeinrichtung weiterhin zu betätigen. Bevorzugt ist es dabei, wenn das Kraftfahrzeug während der Betätigung der Auslöseeinrichtung, insbesondere zusätzlich, vorzugsweise mit der genannten, vorgegebenen Bremskraft verzögert wird, bis der Stillstand ermittelt ist.

Es versteht sich, dass neben dem Verfahren auch ein Kraftfahrzeug mit einem derart betriebenen Bremssystem zum Umfang dieser Erfindung gehört. Dabei sind die betroffenen Bestandteile des Kraftfahrzeugs entsprechend ausgestaltet.

Zum Durchführen des Verfahrens kann das Kraftfahrzeug eine entsprechend ausgestaltete Steuereinrichtung aufweisen. Vorstellbar ist es insbesondere, das erfindungsgemäße Verfahren als ein Computerprogrammprodukt in der Steuereinrichtung zu hinterlegen.

Die Steuereinrichtung kann Bestandsteil des ESP-Steuergeräts sein oder diesem entsprechen.

Denkbar sind auch Ausführungsformen, bei denen die Steuereinrichtung vom ESP-Steuergerät separat ist. Somit ist auch bei einem möglichen Ausfall des ESP-Steuergeräts die Parkbremsfunktion weiterhin möglich und somit die Verfügbarkeit weiter erhöht. Bei der Steuereinrichtung handelt es sich insbesondere um ein Hauptsteuergerät des Kraftfahrzeugs. Das Hauptsteuergerät kann hierbei insbesondere auch dem Steuern einer Antriebseinrichtung des Kraftfahrzeugs dienen. Ebenso kann die Steuereinrichtung ein Steuergerät der Bremsübertragungseinrichtung sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen
Figur 1 eine schematisch, stark vereinfachte und schaltplanartige Darstellung eines Kraftfahrzeugs mit einem Bremssystem,
Figur 2 ein Flussdiagramm zur Erläuterung eines Verfahrens zum Betreiben des Bremssystems.

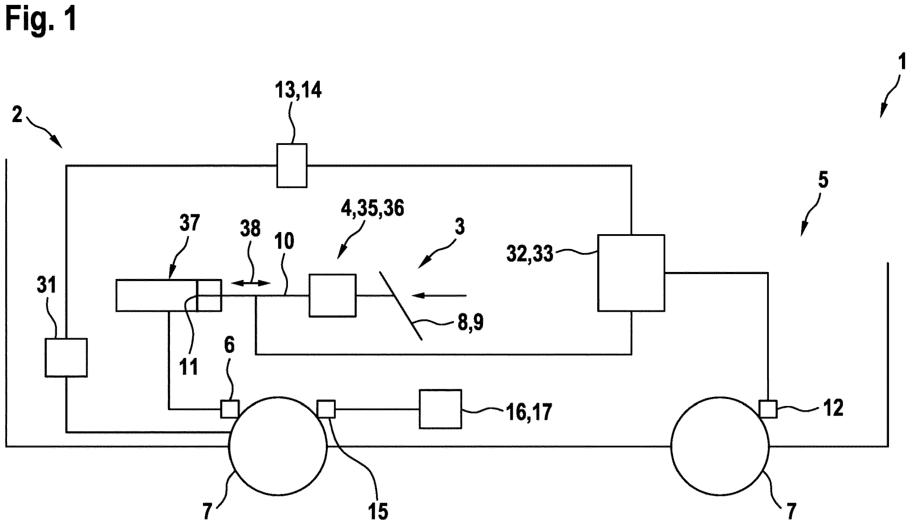

Ein Kraftfahrzeug 1, wie es beispielhaft in Figur 1 stark vereinfacht und schaltplanartige dargestellt ist, weist ein Bremssystem 2 auf. Das Bremssystem 2 umfasst eine Betriebsbremseinrichtung 3, eine Bremsübertragungseinrichtung 4 sowie eine Parkbremseinrichtung 5. Die Betriebsbremseinrichtung 3 dient dem Bremsen des Kraftfahrzeugs 1 während der Fahrt. Zu diesem Zweck weist die Betriebsbremseinrichtung 3 zumindest eine nachfolgend auch als Betriebsbremse 6 bezeichnete Bremse 6 auf, welche auf zumindest ein Rad 7 des Kraftfahrzeugs 1 einwirkt. In Figur 1 sind hierbei rein beispielhaft zwei Räder 7 des Kraftfahrzeugs 1 sichtbar, wobei rein beispielhaft eine einzige Betriebsbremse 6 dargestellt ist, welche beim Betätigen der Betriebsbremseinrichtung 3 auf ein zugehöriges der Räder 7 einwirkt, um das Kraftfahrzeug 1 zu bremsen. Zum Ausüben einer Bremskraft wirkt eine Ausgangsstange 10 der Bremsübertragungseinrichtung 4 mit der zumindest einen Betriebsbremse 6 zusammen. Die Bremsübertragungseinrichtung 4 ist beispielsweise ein Bremskraftverstärker 35, insbesondere ein elektromechanischer Bremsverstärker 35, oder eine Fremdkraftbremse 36. In dem gezeigten Ausführungsbeispiel ist die Bremsübertragungseinrichtung 4 mit einen Betätiger 8 gekoppelt, der bei einer Betätigung zu einem Verstellen der die Ausgansstange 10 führen kann In dem gezeigten Ausführungsbeispielen ist der Betätiger 8 ein Bremspedal 9, welches von einem nicht gezeigten Benutzer, wie mit einem Pfeil angedeutet, betätigt wird. Die zumindest eine Betriebsbremse 6 des gezeigten Ausführungsbeispiels ist hydraulisch betrieben. Zu diesem Zweck wird die Betriebsbremse 6 zum Ausüben einer Bremskraft mit einem in einem Zylinder 37 bevorrateten Bremsflüssigkeit beaufschlagt. Zum Beaufschlagen mit der Bremsflüssigkeit ist im gezeigten Ausführungsbeispiel ein Kolben 11 im Zylinder 37 geführt. Hierbei ist die Ausgangsstange 10 mit dem Kolben 11 verbunden, sodass das Verstellen der Ausgangsstange entlang eines in Figur 1 angedeuteten Verstellwegs 38 zu einer Bewegung des Kolbens 11 im Zylinder 37 führt. Der Kolben 11 presst zum Bremsen die Bremsflüssigkeit mit einem der Bremskraft entsprechenden Druck in Richtung der Betriebsbremse 6, wobei dieser Druck dem Fachmann als Bremsdruck bekannt ist. Die mit der Betriebsbremse 6 ausgeübte Bremskraft ist also vom Verstellweg abhängig. Insbesondere bei Kenntnis des Verstellwegs, der Dimensionierung des Kolbens 11, des Zylinders 37sowie der entsprechenden Volumen in der kann der Bremsdruck ermittelt werden. Mit dem Bremsdruck und somit der Bremskraft kann ferner mit Kenntnis der Gegebenheiten des Kraftfahrzeugs 1 eine Verzögerung, also eine negative Beschleunigung, des Kraftfahrzeugs 1 ermittelt werden.

Die Parkbremseinrichtung 5 dient dem Zweck, das Kraftfahrzeug 1, insbesondere in einer Parkposition, gegenüber einer Bewegung, beispielsweise einem Wegrollen, zu sichern. Die Parkbremseinrichtung 5 blockiert zu diesem Zweck zumindest ein Rad 7 des Kraftfahrzeugs 1. Zu diesem Zweck weist die Parkbremseinrichtung 5 zumindest eine Bremse 12 auf, welche nachfolgend auch als Parkbremse 12 bezeichnet wird und dem Fachmann auch als Feststellbremse 12 bekannt ist. Die zumindest eine Parkbremse 12 blockiert in einem aktivierten Zustand zumindest ein Rad 7 des Kraftfahrzeugs 1. Beim in Figur 1 gezeigten Ausführungsbeispiel ist rein beispielhaft eine Parkbremse 12 der Parkbremseinrichtung 5 zu sehen, wobei die Parkbremse 12 rein beispielhaft und zur besseren Darstellung mit dem vom der Betriebsbremse 6 unterschiedlichen Rad 7 zusammenwirkt. Vorstellbar sind aber auch Ausführungsformen, bei denen die Parkbremse 12 zumindest teilweise der Betriebsbremse 6 entspricht. Zum Aktivieren der zumindest einen Parkbremse 6 weist die Parkbremseinrichtung 5 eine Auslöseeinrichtung 13 auf, welche beispielsweise einen Taster 14 aufweisen kann, der von einem nicht gezeigten Benutzer manuell betätigt werden kann. Ist die Auslöseeinrichtung 13, im gezeigten Ausführungsbeispiel also insbesondere der Taster 14, betätigt und steht das Kraftfahrzeug 1 still, wird die zumindest eine Parkbremse 6 aktiviert. Zur Erkennung eines Stillstands des Kraftfahrzeugs 1 kommt in einem normalen Betrieb eine Raddrehzahlenmesseinrichtung 15 zum Einsatz, welche das Detektieren der Drehzahl zumindest eines Rads 7 des Kraftfahrzeugs 1 ermöglicht. Die von der Raddrehzahlenmesseinrichtung 15 ermittelten Daten werden in einem zugehörigen Steuergerät 16, das insbesondere ein ESP-Steuergerät 17 des Kraftfahrzeugs 1 ist, ausgewertet und somit die aktuelle Geschwindigkeit des Kraftfahrzeugs 1 und folglich auch ein Stillstand des Kraftfahrzeugs 1 bestimmt.

Insbesondere wenn eine derartige Bestimmung des Stillstands des Kraftfahrzeugs 1 nicht möglich ist, beispielsweise wenn die Raddrehzahlmesseinrichtung 15 und/oder das Steuergerät 16 beschädigt und/oder ausgefallen sind, wird zum Aktivieren der zumindest einen Parkbremse 6 wie folgt verfahren.

Es wird eine maximal mögliche Geschwindigkeit des Kraftfahrzeugs 1 herangezogen. Zudem wird der Verstellweg 38 der Bremsübertragungseinrichtung 4 herangezogen, um die mit der zumindest einen Betriebsbremse 6 ausgeübte Verzögerung des Kraftfahrzeug 1, welche eine negative Beschleunigung des Kraftfahrzeugs 1 ist, zu ermitteln. Die maximal mögliche Geschwindigkeit kann beispielsweise die maximal zulässige Geschwindigkeit des Kraftfahrzeugs 1 sein. Ebenso kann die maximal mögliche Geschwindigkeit eine Abschätzung ausgehend von der Geschwindigkeit zum einen Initialzeitpunkt 0 sein, wobei Beschleunigungen des Kraftfahrzeugs 1, beispielsweise durch eine Antriebseinrichtung 31 des Kraftfahrzeugs 1, und/oder ein Gefälle, berücksichtigt werden können. Der Initialzeitpunkt kann beispielsweise der Zeitpunkt des Ausfalls der Raddrehzahlmesseinrichtung 15 und/oder des Steuergeräts 16 sein. Alternativ kann der Initialzeitpunkt ein bekannter Stillstand des Kraftfahrzeugs 1, beispielsweise ein aktivierter Zustand der Parkbremseinrichtung 5 sein.

Zudem wird abhängig vom Verstellweg 38 die Verzögerung des Kraftfahrzeugs 1 ermittelt.

Mithilfe der maximal möglichen Geschwindigkeit und der ermittelten Verzögerung sowie der Zeitspanne der Verzögerung wird dann bestimmt, ob das Kraftfahrzeug 1 zum Zeitpunkt der Betätigung der Auslöseeinrichtung 13, nachfolgend auch als Betätigungszeitpunkt bezeichnet, stillsteht. Sofern dies der Fall ist, erfolgt eine Aktivierung der zumindest einen Parkbremse 6, sodass zumindest wenigstens ein Rad 7 des Kraftfahrzeugs 1 blockiert ist. Ist zum Betätigungszeitpunkt kein Stilltand ermittelt, kann die Aktivierung der zumindest einen Parkbremse 6 hinausgezögert werden, bis ein Stillstand erkannt ist. Dabei kann eine, insbesondere zusätzliche, Verzögerung des Kraftfahrzeugs 1 aktiv durchgeführt werden und/oder ein Benutzer zu einer solchen Durchführung aufgefordert werden.

Das Ermitteln des Stillstands des Kraftfahrzeugs 1 kann über eine Ermittlung einer bei der Verzögerung und deren Zeitspanne ausgehend von der maximal möglichen Geschwindigkeit benötigten Dauer bis zum Stillstand des Kraftfahrzeugs 1 erfolgen. Das Ermitteln des Stillstands kann alternativ oder zusätzlich über die Ermittlung einer bei der Verzögerung und deren Zeitspanne ausgehend von der maximal möglichen Geschwindigkeit aktuellen Geschwindigkeit des Kraftfahrzeugs 1 erfolgen.

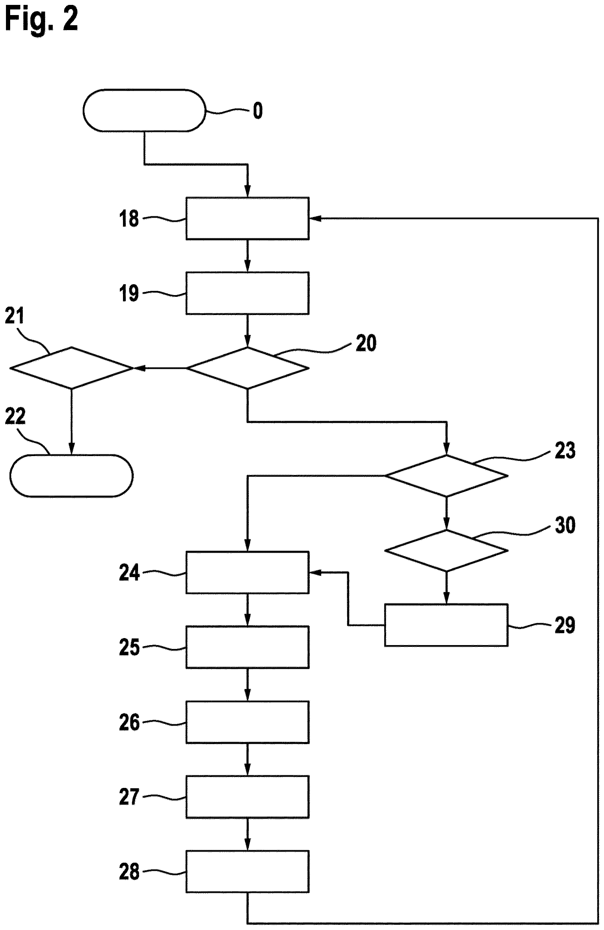

Das vorstehend beschriebene Verfahren zum Aktivieren der Parkbremseinrichtung 5 kann insbesondere gemäß dem in Figur 2 dargestellten Flussdiagramm erfolgen, wobei in dem gezeigten Ausführungsbeispiel die ermittelte aktuelle Geschwindigkeit zum Ermitteln des Stillstands des Kraftfahrzeugs 1 verwendet wird. Dabei ist ferner angenommen, dass die Geschwindigkeit zum Initialzeitpunkt 0 bekannt ist.

Initiiert wird das Verfahren zum Initialzeitpunkt 0 mit einer bekannten Geschwindigkeit. Die bekannte Geschwindigkeit wird in einer Verfahrensmaßnahme 18, nachfolgend auch als Geschwindigkeitsmaßnahme 18 bezeichnet, als aktuelle Geschwindigkeit des Kraftfahrzeugs 1 festgelegt. Ausgehend von der aktuellen Geschwindigkeit wird in einer Verfahrensmaßnahme 19, die nachfolgend auch als Maximierungsmaßnahme 19 bezeichnet wird, unter Berücksichtigung einer maximal möglichen Beschleunigung des Kraftfahrzeugs 1 eine maximal mögliche Geschwindigkeit des Kraftfahrzeugs 1 abgeschätzt. In einer nachfolgenden Verfahrensmaßnahme 20, welche nachfolgend auch als Vergleichsmaßnahme 20 bezeichnet wird, wird vergleichen, ob die in der Maximierungsmaßnahme 19 abgeschätzte maximal mögliche Geschwindigkeit null beträgt, das Kraftfahrzeug 1 also stillsteht. Ist dies der Fall, ist also die abgeschätzte maximal mögliche Geschwindigkeit null, gilt ein Stillstand des Kraftfahrzeugs 1 als ermittelt. Dies ist insbesondere dann gegeben, wenn die aktuelle Geschwindigkeit in der Geschwindigkeitsmaßnahme 18 null beträgt und es in der Maximierungsmaßnahme 19 keine Beschleunigung des Kraftfahrzeugs 1 zu berücksichtigen gab. In einer nachfolgenden Verfahrensmaßnahme 21, die nachfolgend auch als erste Abfragemaßnahme 21 bezeichnet wird, erfolgt eine Abfrage des Zustands der Auslöseeinrichtung 13. Sofern die Auslöseeinrichtung 13 betätigt ist, erfolgt in einer nachfolgenden Verfahrensmaßnahme 22, welche nachfolgend auch als Aktivierungsmaßnahme 22 bezeichnet wird, die Aktivierung der zumindest einen Parkbremse 12. Die zumindest einen Parkbremse 12 wird also aktiviert, sofern die Auslöseeinrichtung 13 betätigt ist und die ermittelte aktuelle Geschwindigkeit null beträgt.

Ist das Ergebnis in der Vergleichsmaßnahme 20 eine von null abweichende aktuelle Geschwindigkeit, steht das Kraftfahrzeug 1 also gemäß der ermittelten aktuellen Geschwindigkeit nicht still, wird in einer Verfahrensmaßnahme 23, der Zustand der Auslöseeinrichtung 13 abgefragt, also abgefragt, ob die Auslöseeinrichtung 13 betätigt ist. Diese Verfahrensmaßnahmen 23 ist also ebenfalls eine Abfragemaßnahme 23 und wird nachfolgend zur besseren Unterscheidung gegenüber der ersten Abfragemaßnahme 21 als zweite Abfragemaßnahme 23 bezeichnet. Ergibt die zweite Abfragemaßnahme 21 eine fehlende Betätigung der Auslöseeinrichtung 13, werden nachfolgend die Verzögerung und die daraus resultierende, dann aktuelle Geschwindigkeit ermittelt.

Zu diesem Zweck wird in einer Verfahrensmaßnahmen 24 der Verstellweg der Eingangsstange 10 ermittelt und/oder abgefragt. In der nachfolgenden Verfahrensmaßnahmen 25 erfolgt basierend auf dem Verstellweg der Eingangsstange 10 das Bestimmen des Bremsdrucks. In der Verfahrensmaßnahmen 25 erfolgt also eine Umrechnung des Verstellwegs in den Bremsdruck. In einer nachfolgenden Verfahrensmaßnahmen 26 wird basierend auf dem Bremsdruck die mit dem Bremsdruck erzielte Verzögerung des Kraftfahrzeugs 1 ermittelt. Zudem wird in einer Verfahrensmaßnahmen 27 die Zeitspanne der Verzögerung ermittelt bzw. abgefragt. Mithilfe der ermittelten Verzögerung sowie der Zeitspanne wird in einer nachfolgenden Verfahrensmaßnahmen 28, nachfolgend auch als Aktualisierungsmaßname 28 bezeichnet, die ausgehend von der in der Vergleichsmaßnahme 18 ermittelten Geschwindigkeit aufgrund der Verzögerung und der Zeitspanne folgende, nunmehr aktuelle Geschwindigkeit v ermittelt. In der Aktualisierungsmaßname 28 erfolgt also eine Aktualisierung der aktuellen Geschwindigkeit. Das Verfahren kehrt dann mit der in der Aktualisierungsmaßnahme 26 ermittelten aktuellen Geschwindigkeit zur Geschwindigkeitsmaßnahme 18 zurück, wobei Geschwindigkeitsmaßnahme 18 die in der Aktualisierungsmaßnahme 26 ermittelte zuvor festgelegt aktuelle Geschwindigkeit, bei der ersten Iteration also die Geschwindigkeit zum Initialzeitpunkt, ersetzt.

Ist das Ergebnis der zweiten Abfragemaßnahme 23 ein betätigter Zustand der Auslöseeinrichtung 13, ist also die Auslöseeinrichtung 13 betätigt und ist die aktuelle Geschwindigkeit ungleich null, kann in einer Verfahrensmaßnahmen 29 die Eingangsstange 10 um einen vorgegebenen Verstellweg verstellt werden. Diese Verfahrensmaßnahmen 29 kann daher auch als aktive Betriebsbremsmaßnahme 29 bezeichnet werden. Anschließend geht das Verfahren zur Verfahrensmaßnahmen 24, wobei die in der Betriebsbremsmaßnahme 29 erfolgte, vorgegebene Verstellung der Eingangsstange 10 entsprechend berücksichtigt wird. Wie Figur 2 entnommen werden kann, ist es möglich, vor dem Durchführen der Betriebsbremsmaßnahme 29 in einer Verfahrensmaßnahmen 30 zu überprüfen, ob bereits eine Verstellung der Eingangsstange 10 vorliegt, und die Betriebsbremsmaßnahme 29 nur dann durchzuführen, wenn das Ergebnis der Überprüfung in der Verfahrensmaßnahmen 30 oberhalb eines vorgegebenen Werts liegt, also nur dann, wenn der Verstellweg kleiner ist als ein vorgegebener Wert.

Im Kraftfahrzeug 1 wird das erfindungsgemäße Verfahren mithilfe einer entsprechend ausgestalteten Steuereinrichtung 32 umgesetzt. Dies kann mittels eines in der Steuereinrichtung 32 hinterlegten Computerprogrammprodukts erfolgen. Bevorzugt ist die Steuereinrichtung 32 vom Steuergerät 16 separat. Die Steuereinrichtung 32 ist insbesondere ein Hauptsteuergerät 33 des Kraftfahrzeugs 1. Die Steuereinrichtung 32 ist zu diesem Zweck entsprechend kommunizierend mit der zumindest einen Parkbremse 12, der Auslöseeinrichtung 13, der Bremsübertragungseinrichtung 4 und der Antriebseinrichtung 31 verbunden.

## Patentansprüche

1. Verfahren zum Betreiben eines Bremssystems (2) eines Kraftfahrzeugs (1),
- wobei das Bremssystem (2) eine Betriebsbremseinrichtung (3) mit zumindest einer Betriebsbremse (6) aufweist,
- wobei das Bremssystem (2) eine Bremsübertragungseinrichtung (4) mit einer Ausgangsstange (10) aufweist, mittels welcher eine Bremskraft zum Bremsen auf die zumindest eine Betriebsbremse (6) übertragen wird,
- wobei das Bremssystem (2) eine Parkbremseinrichtung (5) mit zumindest einer Parkbremse (12) und einer Auslöseeinrichtung (13) zum Aktivieren der zumindest einen Parkbremse (12) aufweist,
- wobei abhängig von einem Verstellweg der Ausgangsstange (10) eine mit der zumindest einen Betriebsbremse (6) ausgeübte Verzögerung des Kraftfahrzeugs (1) ermittelt wird,
- wobei die maximal mögliche Geschwindigkeit des Kraftfahrzeugs (1) herangezogen wird,
- wobei ausgehend von der maximal möglichen Geschwindigkeit unter Berücksichtigung der ermittelten Verzögerung und der Zeitspanne der Verzögerung ermittelt wird, ob das Kraftfahrzeug zu einem Betätigungszeitpunkt, in welchem die Auslöseeinrichtung (13) betätigt wird, stillsteht,
- wobei die zumindest eine Parkbremse (12) aktiviert wird, wenn zum Betätigungszeitpunkt ein Stillstand des Kraftfahrzeugs (1) ermittelt ist.

2. Verfahren nach Anspruch 1,
**dadurch gekennzeichnet,**
**dass** die Bremskraftübertragungseinrichtung (4) mit einem Betätiger (8) zum Betätigen der zumindest einen Betriebsbremse (6) gekoppelt ist, derart, die Bremskraftübertragungseinrichtung (4) die Ausgangsstange (10) abhängig vom Betätiger (8) entlang des Verstellwegs verstellt.

3. Verfahren nach Anspruch 1 oder 2,
**dadurch gekennzeichnet,**
**dass**, wenn zum Betätigungszeitpunkt kein Stillstand ermittelt ist, die zumindest eine Betriebsbremse (6) erst dann aktiviert wird, wenn ein Stillstand des Kraftfahrzeugs (1) ermittelt ist.

4. Verfahren nach einem der Ansprüche 1 bis 3,
**dadurch gekennzeichnet,**
**dass**, wenn zum Betätigungszeitpunkt kein Stillstand ermittelt ist:
- die zumindest eine Betriebsbremse (6) mit einer vorgegebenen Bremskraft betätigt wird,
- die zumindest eine Parkbremse (12) aktiviert wird, wenn ein Stillstand des Kraftfahrzeugs (1) ermittelt ist.

5. Verfahren nach Anspruch 4,
**dadurch gekennzeichnet,**
**dass**, wenn zum Betätigungszeitpunkt kein Stillstand ermittelt ist, eine Meldung mit einer Aufforderung an einen Benutzer ausgegeben wird, die Auslöseeinrichtung (13) weiterhin zu betätigen.

6. Verfahren nach einem der Ansprüche 1 bis 5,
**dadurch gekennzeichnet,**
**dass** das Heranziehen der maximal möglichen Geschwindigkeit eine zu einem Initialzeitpunkt bekannte Geschwindigkeit des Kraftfahrzeugs (1) berücksichtigt.

7. Verfahren nach Anspruch 6,
**dadurch gekennzeichnet,.**
**dass** der Initialzeitpunkt der Zeitpunkt eines Ausfalls einer Raddrehzahlmesseinrichtung (15) des Kraftfahrzeugs (1) und/oder der Zeitpunkt eines Stillstandes des Kraftfahrzeugs (1) ist

8. Verfahren nach einem der Ansprüche 1 bis 7,
**dadurch gekennzeichnet,**
**dass** das Heranziehen der maximal möglichen Geschwindigkeit durch eine Abschätzung abhängig von einer Drehzahl einer Antriebseinrichtung des Kraftfahrzeugs (1) und der Übersetzung der Drehzahl auf zumindest ein angetriebenes Rad (7) des Kraftfahrzeugs (1) erfolgt.

9. Kraftfahrzeug (1) mit einem Bremssystem (2),
- wobei das Bremssystem (2) eine Betriebsbremseinrichtung (3) mit zumindest einer Betriebsbremse (6),
- wobei das Bremssystem (2) eine Bremskraftübertragungseinrichtung (4) mit einer Ausgangsstange (10) aufweist, welche derart ausgestaltet ist, dass sie mittels der Ausgangsstange (10) eine Bremskraft zum Bremsen auf die zumindest eine Betriebsbremse (6) überträgt,
- wobei das Bremssystem (2) eine Parkbremseinrichtung (5) mit zumindest einer Parkbremse (12) und einer Auslöseeinrichtung (13) zum Aktivieren der zumindest einen Parkbremse (12) aufweist
- mit einer Steuereinrichtung (32), **dadurch gekennzeichnet, dass** diese Steuereinrichtung (32) derart ausgestaltet ist, dass sie das Bremssystem (2) gemäß dem Verfahren nach einem der Ansprüche 1 bis 8 betreiben kann.

10. Kraftfahrzeug nach Anspruch 9,
**dadurch gekennzeichnet,**
**dass** die Bremskraftverstärkereinrichtung (4) elektromechanisch betrieben ist.

## Claims

1. Method for operating a brake system (2) of a motor vehicle (1),
- wherein the brake system (2) has a service brake device (3) with at least one service brake (6),
- wherein the brake system (2) has a brake transmission device (4) with an output rod (10), which is used to transmit a brake force to the at least one service brake (6) for braking purposes,
- wherein the brake system (2) has a parking brake device (5) with at least one parking brake (12) and a triggering device (13) for activating the at least one parking brake (12),
- wherein a deceleration of the motor vehicle (1) applied using the at least one service brake (6) is determined in dependence on a displacement path of the output rod (10),
- wherein the maximum possible speed of the motor vehicle (1) is used,
- wherein, on the basis of the maximum possible speed and taking into account the determined deceleration and the time span of the deceleration, it is determined whether the motor vehicle is at a standstill at an actuation time at which the triggering device (13) is actuated,
- wherein the at least one parking brake (12) is activated when a standstill of the motor vehicle (1) is determined at the actuation time.

2. Method according to Claim 1,
**characterized**
**in that** the brake force transmission device (4) is coupled in such a manner to an actuator (8) for actuating the at least one service brake (6) that the brake force transmission device (4) displaces the output rod (10) along the displacement path in dependence on the actuator (8).

3. Method according to Claim 1 or 2,
**characterized**
**in that**, when no standstill is determined at the actuating time, the at least one service brake (6) is actuated only when a standstill of the motor vehicle (1) is determined.

4. Method according to one of Claims 1 to 3,
**characterized**
**in that**, when no standstill is determined at the actuating time:
- the at least one service brake (6) is actuated with a predefined brake force,
- the at least one parking brake (12) is activated when a standstill of the motor vehicle (1) is determined.

5. Method according to Claim 4,
**characterized**
**in that**, when no standstill is determined at the actuating time, a message with a prompt to continue to actuate the triggering device (13) is output to a user.

6. Method according to one of Claims 1 to 5,
**characterized**
**in that** the use of the maximum possible speed takes into account a speed of the motor vehicle (1) that is known at an initial time.

7. Method according to Claim 6,
**characterized**
**in that** the initial time is the time of a failure of a wheel rotational-speed measuring device (15) of the motor vehicle (1) and/or the time of a standstill of the motor vehicle (1).

8. Method according to one of Claims 1 to 7,
**characterized**
**in that** the maximum possible speed is used by way of an estimation in dependence on a rotational speed of a drive device of the motor vehicle (1) and on the transmission ratio of the rotational speed to at least one driven wheel (7) of the motor vehicle (1).

9. Motor vehicle (1) with a brake system (2),
- wherein the brake system (2) has a service brake device (3) with at least one service brake (6),
- wherein the brake system (2) has a brake force transmission device (4) with an output rod (10), which is configured in such a manner that it transmits a brake force to the at least one service brake (6) for braking purposes by means of the output rod (10),
- wherein the brake system (2) has a parking brake device (5) with at least one parking brake (12) and a triggering device (13) for activating the at least one parking brake (12),
- with a control device (32), **characterized in that** said control device (32) is configured in such a manner that it can operate the brake system (2) in accordance with the method according to one of Claims 1 to 8.

10. Motor vehicle according to Claim 9,
**characterized**
**in that** the brake force booster device (4) is operated electromechanically.

## Revendications

1. Procédé pour faire fonctionner un système de freinage (2) d'un véhicule automobile (1),
- le système de freinage (2) présentant un dispositif de frein de service (3) avec au moins un frein de service (6),
- le système de freinage (2) présentant un dispositif de transmission de freinage (4) avec une tige de sortie (10), au moyen de laquelle une force de freinage est transmise pour le freinage à l'au moins un frein de service (6),
- le système de freinage (2) présentant un dispositif de frein de stationnement (5) avec au moins un frein de stationnement (12) et un dispositif de déclenchement (13) pour activer l'au moins un frein de stationnement (12),
- une décélération du véhicule automobile (1) exercée avec l'au moins un frein de service (6) étant déterminée en fonction d'une course de réglage de la tige de sortie (10),
- la vitesse maximale possible du véhicule automobile (1) étant utilisée,
- en partant de la vitesse maximale possible, en tenant compte de la décélération déterminée et de la durée de la décélération, il étant déterminé si le véhicule automobile est à l'arrêt à un instant d'actionnement auquel le dispositif de déclenchement (13) est actionné,
- l'au moins un frein de stationnement (12) étant activé lorsqu'un arrêt du véhicule automobile (1) est déterminé à l'instant d'actionnement.

2. Procédé selon la revendication 1,
**caractérisé en ce que**
le dispositif de transmission de force de freinage (4) est couplé à un actionneur (8) pour actionner l'au moins un frein de service (6), de telle sorte que le dispositif de transmission de force de freinage (4) règle la tige de sortie (10) en fonction de l'actionneur (8) le long de la course de réglage.

3. Procédé selon la revendication 1 ou 2,
**caractérisé en ce que**
si aucun arrêt n'est déterminé à l'instant d'actionnement, l'au moins un frein de service (6) n'est activé que lorsqu'un arrêt du véhicule automobile (1) est déterminé.

4. Procédé selon l'une quelconque des revendications 1 à 3,
**caractérisé en ce que**
si aucun arrêt n'est détecté à l'instant d'actionnement :
- l'au moins un frein de service (6) est actionné avec une force de freinage prédéfinie,
- l'au moins un frein de stationnement (12) est activé lorsqu'un arrêt du véhicule automobile (1) est déterminé.

5. Procédé selon la revendication 4,
**caractérisé en ce que**
si aucun arrêt n'est déterminé à l'instant d'actionnement, un message est émis avec une invitation à un utilisateur à continuer d'actionner le dispositif de déclenchement (13).

6. Procédé selon l'une quelconque des revendications 1 à 5,
**caractérisé en ce que**
l'utilisation de la vitesse maximale possible tient compte d'une vitesse du véhicule automobile (1) connue à un instant initial.

7. Procédé selon la revendication 6,
**caractérisé en ce que**
l'instant initial est l'instant d'une défaillance d'un dispositif de mesure de la vitesse de rotation des roues (15) du véhicule automobile (1) et/ou l'instant d'un arrêt du véhicule automobile (1).

8. Procédé selon l'une quelconque des revendications 1 à 7,
**caractérisé en ce que**
l'utilisation de la vitesse maximale possible s'effectue par une estimation en fonction d'une vitesse de rotation d'un dispositif d'entraînement du véhicule automobile (1) et de la transmission de la vitesse de rotation à au moins une roue entraînée (7) du véhicule automobile (1).

9. Véhicule automobile (1) avec un système de freinage (2),
- le système de freinage (2) présentant un dispositif de frein de service (3) avec au moins un frein de service (6),
- le système de freinage (2) présentant un dispositif de transmission de force de freinage (4) avec une tige de sortie (10), qui est conçu de telle sorte qu'il transmet, au moyen de la tige de sortie (10), une force de freinage pour le freinage à l'au moins un frein de service (6),
- le système de freinage (2) présentant un dispositif de frein de stationnement (5) avec au moins un frein de stationnement (12) et un dispositif de déclenchement (13) pour activer l'au moins un frein de stationnement (12),
- avec un dispositif de commande (32), **caractérisé en ce que** ce dispositif de commande (32) est conçu de manière à pouvoir faire fonctionner le système de freinage (2) par le procédé selon l'une quelconque des revendications 1 à 8.

10. Véhicule automobile selon la revendication 9,
**caractérisé en ce que**
le dispositif d'assistance au freinage (4) est à fonctionnement électromécanique.
